# EUROPEAN PATENT APPLICATION

(11) **EP 2 604 874 A1**
(43) Date of publication of application: **19.06.2013**
(21) Application number: 10855840.4
(22) Date of filing: 13.08.2010
(51) Int. Cl.: F16C 19/52, F02B 75/24

(54) **INTERMEDIATE SHAFT SUPPORT SYSTEM FOR INTERNAL COMBUSTION ENGINES WITH OPPOSED CYLINDERS**

(71) Applicant: RRM Ingenieria y Servicios Automotrices, S.L.U., 48960 Galdakao (Vizcaya) (ES)
(72) Inventor: RODRIGUEZ MARTINEZ, Roberto, E-48960 Galdakao (Vizcaya) (ES)
(74) Representative: Carpintero Lopez, Francisco
(86) International application number: PCT/ES2010/070556
(87) International publication number: WO 2012/020150

(57) **Abstract**

Intermediate shaft support system for boxer internal combustion engines with opposed cylinders comprising
a shaft-holder part (1) coupled to an engine block of an engine, in which said shaft-holder part (1) comprises an internal cavity (1 a) that is open at both ends; a shaft (3) inserted inside both said shaft-holder part (1) and the intermediate shaft ring (2); a first bearing (4) in contact with said shaft (3) and with said intermediate shaft ring (2); and at least one second bearing (5) in contact with said shaft (3) which may come into contact with said intermediate shaft ring (2) in the event of a system failure; such that it allows considerably improving the reliability of this system with respect to currently used intermediate shaft support systems.

## Description

### Technical Field of the Invention

The present invention relates to an intermediate shaft support system normally used in internal combustion engines with opposed cylinders or boxer engines, where said system can be applied in the automotive industry.

The main function of this intermediate shaft support system is to transmit the rotational movement of the engine crankshaft to the cylinder heads where the valves, injectors, as well as the "variocam" variable distribution systems are located. In the event of breaking, the intermediate shaft support system currently results in a general engine failure leading to complete damage and rendering all the vital engine organs useless. With the new devised system, safety is considerably improved because in the event of breaking, the intermediate shaft would never become detached as occurs with the conventional intermediate shaft support system, and general engine damage and failure is therefore prevented.

Furthermore, the user would detect the failure because in the new system, there are alarm devices which, in the event of a failure, produce a loud vibration that would force the user to shut off the engine, thereby being saved from the general failure.

### Background of the Invention

By way of introduction, an intermediate shaft support system is normally used in boxer internal combustion engines.

This system is coupled in a lower portion with respect to the crankshaft of the engine located in a lower portion because that way it achieves, among others, lowering the center of gravity of the engine, because said engines are usually linked with sports and high-performance vehicles.

Movement is transmitted to the intermediate shaft from the crankshaft by means of a chain, and two more chains, one for each side of the engine or for each cylinder head, also originate from the intermediate shaft, such that said movement of the crankshaft is connected with the respective camshafts. Therefore, there is a direct relationship between the rotational movement of the crankshaft and the opening and closing of the valves associated with each camshaft.

Current problems relating to this intermediate shaft support system, which often sustains breaks due to fatigue because it inherently comprises a weak design in reference to the high stresses generated there, are known. That is primarily due to the fact that the currently used intermediate shaft support system comprises a rotation shaft coupled to a single ball bearing of a rather low quality for the required task.

This bearing is in contact with an outer ring, which connects the crankshaft with the cylinder heads by means of a chain. Due to sustaining continuous high mechanical stresses, the bearing breaks and the bearing-holder shaft splits in two, so the intermediate shaft is left unsupported and becomes detached, such that the motion ratio is not transmitted from the crankshaft to the cylinder heads.

At this point, the different elements included in the cylinder heads, such as valves, shafts, auxiliary oil pumps, springs, etc., stop and hit against parts that are still moving, such as the pistons themselves, causing expensive breaks of the engine block, crankshaft, piston sleeves and valves, all of which is very difficult to repair, resulting in a complete engine replacement.

One of the possible solutions is to focus on the materials used in the joint bearing between the rotation shaft and the outer ring, such that the bearing comprises very resistant materials which prolong the service life of the intermediate shaft support system. Said materials used in the bearings are materials such as ceramic material and sintered silicon, which solve part of the problems referring to breaking due to fatigue of the bearing at hand. These materials are substantially more expensive than the bearings initially used for said system, making it almost prohibitive to install them in vehicles with engines of these characteristics in mass productions.

Another possible solution is that devised by the company LN Engineering LLC, which includes a design that is identical to the original design but with a somewhat improved bearing. Even still, LN's system has the main drawback that in the event that the bearing at hand likewise breaks, the same failures described above occur, such that moving parts inside the engine contact one another and the breakdown caused is the breaking of the engine.

It is therefore necessary to find a new intermediate shaft support system which greatly rectifies the drawbacks mentioned above. In the sense of prolonging the service life of the system and especially improving its reliability, in the event that the main bearing breaks, a mechanism or additional elements which prevent the rotation shaft from becoming detached and general damage of the engine itself, is envisaged.

It has also been taken into account that the cost of this system is not high, such that it can be implemented in existing vehicles comprising said intermediate shaft support, thereby offering a solution in addition to an improvement to the intermediate shaft support system.

### Description of the Invention

The present invention relates to an intermediate shaft support system for internal combustion engines with opposed cylinders or boxer combustion engines, which allows improving the reliability of the system object of invention, the main purpose being to increase the durability of the system and to further prevent detachments of the intermediate shaft that cause important breaks in internal parts of the engine itself.

The intermediate shaft support system for internal combustion engines with opposed cylinders proposed by the invention comprises
a shaft-holder part coupled to an engine block, where said shaft-holder part comprises an internal cavity that is open at both ends,
a bearing-holder shaft inserted inside both said shaft-holder part and an intermediate shaft ring,
in addition to a first bearing in contact with said shaft and with said intermediate shaft ring, a second bearing in contact with said bearing-holder shaft which may come into contact with said intermediate shaft ring in the event of a system failure.

It is therefore observed how the parts comprised in the system are the parts normally used in the intermediate shaft support systems, with the exception of the inclusion of said at least one new element referred to as second bearing, which is coupled to the bearing-holder shaft and has the novel technical feature of not being in contact with the intermediate shaft ring, when the system operates correctly, i.e., when the intermediate shaft support system operates correctly, the first bearing is in contact with the ring so that it can freely rotate and transmit movement from the crankshaft to the respective cylinder heads. Therefore, it acts like a usual intermediate shaft system but when a failure occurs due to excessive stress or fatigue in the system object of invention, the first bearing breaks and the second bearing, which was initially not in contact with the ring, performs the function of the support and supports said ring, allowing the free rotation of said ring without failures occurring in the system due to possible detachments and/or oscillating rotary displacements.

Therefore, the inclusion of said at least one second bearing in the intermediate shaft support system solves the problems described above such that with an additional element, arranged in such a manner, that it does not come into contact with the ring until the first bearing fails. The reliability of the system is therefore improved without affecting its correct operation, all this with a novel additional element that is easy to implement in engines comprising intermediate shaft support systems.

Complementarily, the possibility that the intermediate shaft support system comprises a plurality of lugs coupled to the periphery of the shaft-holder part which may come into contact with the intermediate shaft ring in the event of a system failure, producing a vibration such that the user becomes aware that something is failing in the transmission of movement of the vehicle, is contemplated.

In the event of a breakdown, axial movement of the gear ring is limited with these lugs such that when the mentioned lugs come into contact with the periphery of the ring, those aforementioned vibrations audibly notifying the breakdown in the mentioned system are produced.

For the sake of clarification, the parts or elements comprising the system object of invention act such that:
- the shaft-holder part is coupled to one of the walls of the engine block, and it is what supports part of the shaft comprising both the first bearing and said at least one second bearing;
- the bearing-holder shaft inserted inside said shaft-holder part is responsible for supporting both the first and said at least one second bearing and allowing the free rotation of the intermediate shaft ring.

The possibility that the shaft comprises a cylindrical geometry with an intermediate torus-shaped protuberance defining the support of the first bearing on one hand and of said at least one second bearing on the other is contemplated. Furthermore, it is the holder of the O-rings which prevent oil leaks.

As a result, unlike the known state of the art, the shaft comprises a more elongated geometry than currently used shafts, such that it allows the inclusion of said at least one second bearing after the first bearing.

The intermediate torus-shaped protuberance performs the function of preventing possible axial displacements of the bearings adjacent to it, being able to arrange additional torus-shaped protuberances to define separations between additional bearings or to prevent axial movements in the entire system object of invention.

The shaft will preferably have a suitable dimension so that it is very robust in response to fatigue stresses produced in said shaft (preferably around 20 mm in diameter).

As mentioned, the novelty of this intermediate shaft support system is completed with a plurality of coupled lugs in contact with the periphery of said shaft-holder part which may come into contact with the intermediate shaft ring in the event of a system failure, producing the aforementioned vibration so that the user becomes aware of the failure.

Said lugs preferably comprise a cylindrical geometry and are radially coupled on the shaft-holder part, such that in a normal system situation, the lugs do not perform any specific function, being arranged such that they do not affect the weight distribution of the system object of invention; but in the event that the first bearing breaks, the unevenness caused by the shaft leads to the lugs coming into contact with the intermediate shaft ring, producing noticeable vibrations that will be detected by the user and will notify the user of the break or failure in the intermediate shaft support system; and in the event that the user does not perceive where the break has occurred due to the vibrations and noises, he/she will shut off the engine and prevent more serious breaks from occurring that would entail replacing the engine.

The plurality of lugs is preferably made of tempered and sealed high-strength steel.

The possibility that the shaft-holder part comprises a noticeably flat surface on one of its sides, which is the side that is in contact with the engine block, where said noticeably flat surface comprises coupling means between the shaft-holder part and the engine block, is contemplated.

The shaft-holder part in the conventional intermediate shaft support system comprises independent machined modules where the coupling means for coupling the shaft-holder part to the engine block are respectively located. Breaks can occur in the respective modules in the event of excessive stress or continued fatigue. In the device object of invention, since a noticeably flat surface is provided in the shaft-holder part, when it is coupled to the engine block it all forms a single block, achieving greater structural rigidity and without there being points or areas where stresses are concentrated, such as square edges or similar geometries.

Therefore the main function of both said at least one supporting cover and said at least one support means is the correct coupling between said at least one second bearing and the shaft, such that there are no possible clearances or service failures, preventing the bearings from being able to be extracted from the shaft in response to axial stresses, and where said cover does not negatively affect the correct operation of the intermediate shaft support system and does not come into in contact with any nearby moving part.

Said at least one cover will preferably be cylindrical and will have two inner cylindrical cavities, such that the respective support means can be coupled to them, said support means preferably being screws.

The possibility that the support of the intermediate shaft support system comprises the following is contemplated:
at least one retaining washer coupled to the shaft and in contact with the shaft-holder part, and
a nut coupled to the shaft at one of its ends and in contact with said retaining washer.

Usually when a breakdown occurs or preventive maintenance is to be performed, said nut will be removed for the correct extraction from the outer zone of the engine, helping the technician in charge when servicing the engine.

Finally and as preferred embodiments, the following possibilities are contemplated:
- the first bearing is a ball bearing, and where
- said at least one second bearing is preferably a ball and roller bearing, such that it withstands high radial and axial stresses.

Therefore according to the described invention, the intermediate shaft support system for internal combustion engines with opposed cylinders proposed by the invention is an advance in the intermediate shaft systems used to date and solves in a fully satisfactory manner the problems described above in the sense of prolonging the service life of the system, improving its reliability because in the event that the main bearing breaks, there is a mechanism or additional elements which prevent the intermediate shaft from becoming detached and prevent moving parts from coming into contact with internal parts of the engine itself, and where additionally the cost of this system is not as high such that it can be implemented in existing vehicles comprising said conventional intermediate shaft support system.

### Description of the Drawings

To complement the description that is being made and for the purpose of helping to better understand the features of the invention according to a preferred practical embodiment thereof, a set of drawings is attached as an integral part of said description in which the following has been depicted with an illustrative and non-limiting character:

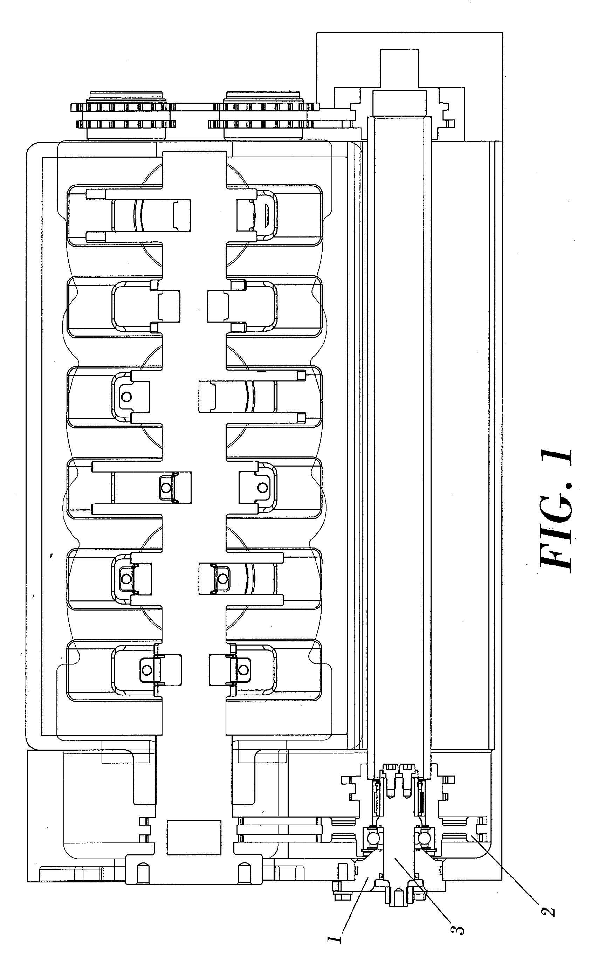

Figure 1 shows a general view of the engine and the location of the intermediate shaft support system arranged in the engine block and inside the intermediate shaft ring.
Figure 2 shows an elevational view with a cross-section of the intermediate shaft support system.
Figure 2a depicts a perspective view of the mentioned intermediate shaft support system.
Figure 3 shows a perspective view of part of the elements making up the intermediate shaft support system.
Figure 4 shows a profile view of the shaft.
Figure 5 shows a perspective view of the shaft-holder part.
Figure 6 shows a perspective view of the supporting cover that is supported at the end of the shaft.

### Preferred Embodiment of the Invention

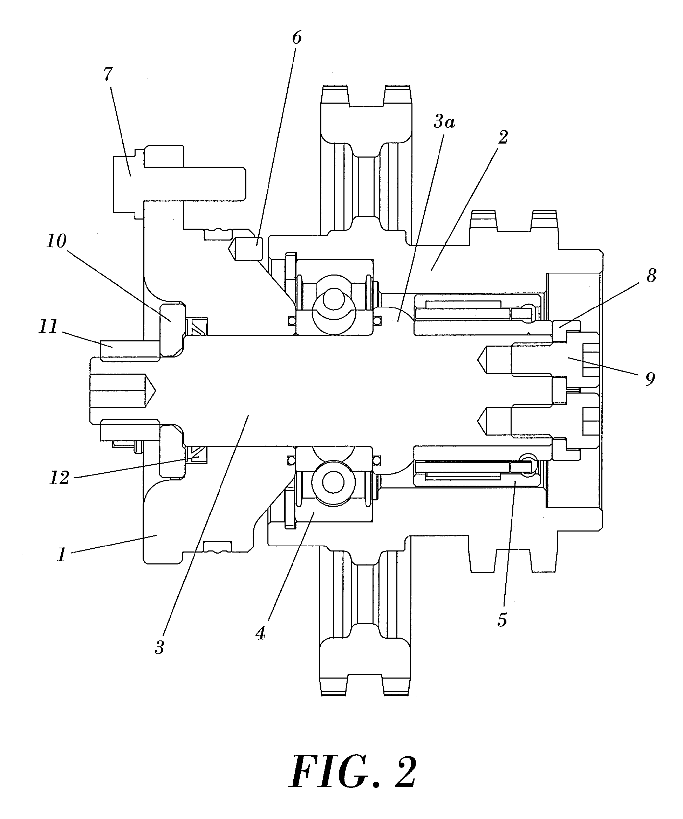

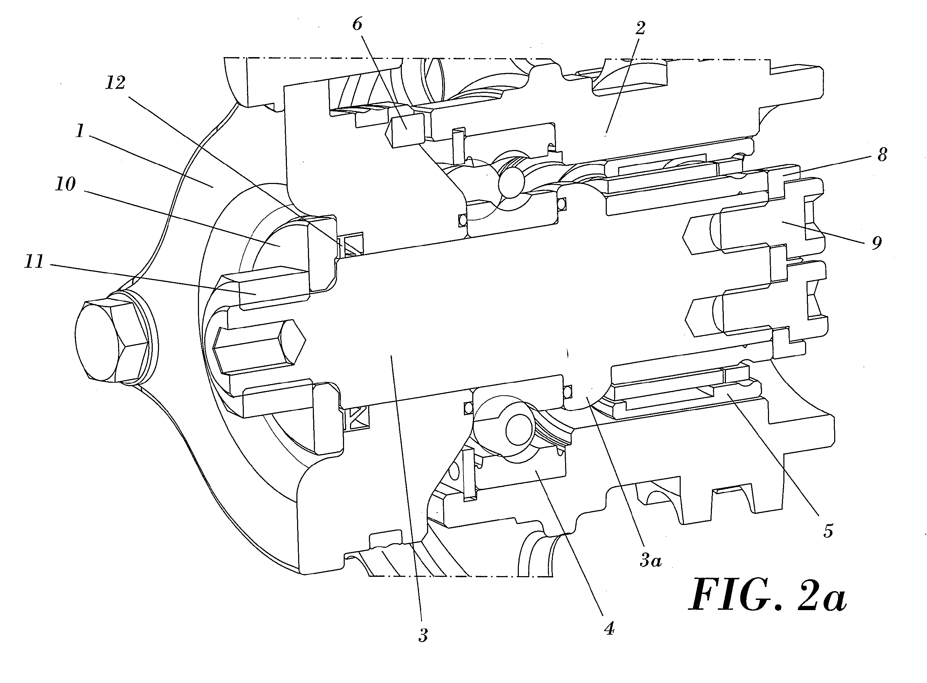

In view of Figures 2 and 2a, it can be observed how in one of the possible embodiments of the intermediate shaft support system used in internal combustion engines with opposed cylinders proposed by the invention it comprises:
a shaft-holder part (1) coupled to an engine block, comprising an internal cavity (1 a) that is open at both ends and a noticeably flat surface on the face in contact with the engine block,
a shaft (3) inserted inside both said shaft-holder part (1) and an intermediate shaft ring (2) forming part of the system for transmitting movement of the engine,
a first bearing (4) in contact with said shaft (3) and with said intermediate shaft ring (2), and
a second bearing (5) in contact with said shaft (3) which may come into contact with said intermediate shaft ring (2) in the event of a system failure.

It is observed how the arrangement of all the elements is distributed such that the center of gravity of the system is located in the axis of revolution of the shaft (3) and there are no unwanted inertias when the intermediate shaft ring (2) is engaged in rotational movement.

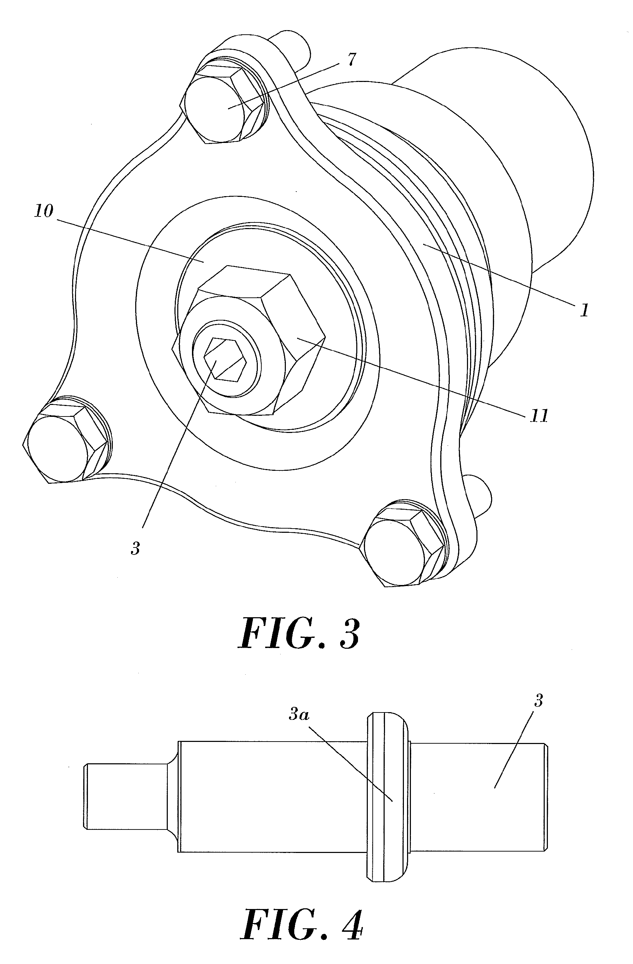

In view of Figure 4, it is observed how the shaft (3) comprises a cylindrical geometry with an intermediate torus-shaped protuberance (3a) defining the support of the first bearing (4) on one hand and of the second bearing (5) on the other.

Complementarily, Figure 2 shows how the intermediate shaft support system comprises a plurality of lugs (6) coupled to the periphery of said shaft-holder part (1) which may come into contact with the intermediate shaft ring (2) belonging to the engine block in the event of a system failure. There is a varying number of lugs (6) distributed in the corners of a fictitious regular polygonal shape with the center of the axis of revolution in the shaft (3), where it can additionally be seen how in response to a rotation of the shaft-holder part (1), the lugs (6) will come into contact with the intermediate shaft ring (2) and notify about the failure of the device. Said lugs (6) are made of tempered and sealed high-strength steel.

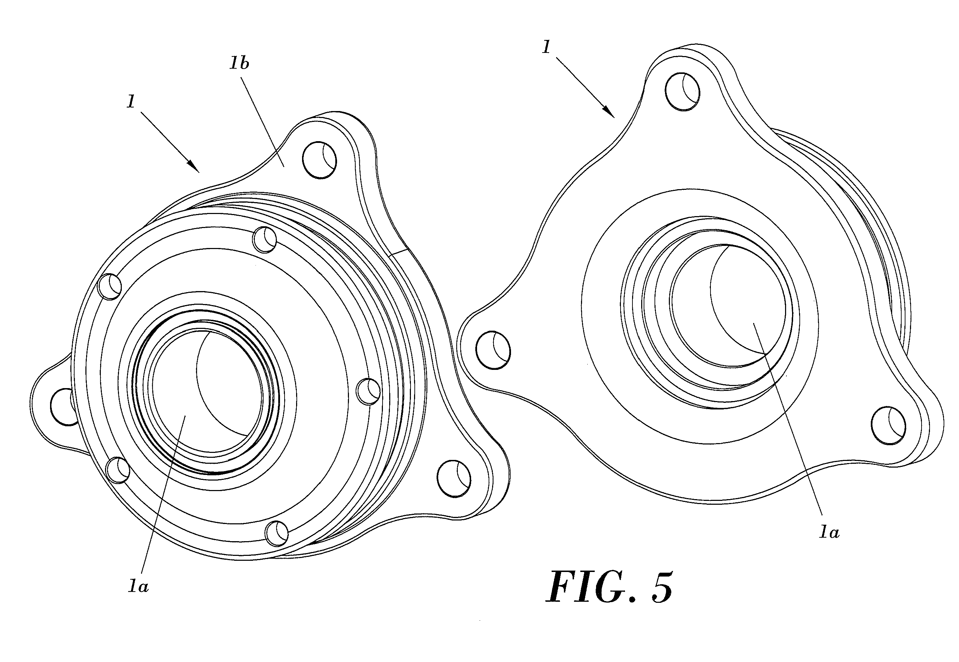

As can be observed in Figures 3 and 5, the shaft-holder part (1) comprises a noticeably flat surface (1 b) on one of its sides that contacts with the engine block where said noticeably flat surface (1 b) comprises coupling means (7) between the shaft-holder part (1) and the engine block (not depicted). The coupling means (7) are high-strength screws arranged in the corners of a triangle.

In view of Figure 5, the flat surface (1b) that is machined in a single block can be seen and square edges that may be focal points where stresses are concentrated cannot be seen.

The system is supported on one side of the shaft (3) by means of a nut (11) in turn supported in the retaining washer (10), which supports the closure of the lip seal (12), and it is supported at the other end by means of the cover (8) and the screws (9).

The purpose of placing the lip seal (12) is based on forming a barrier against an oil leak towards the nut (11) in the event of a failure of the O-rings near the protuberance (3a) of the shaft (3).

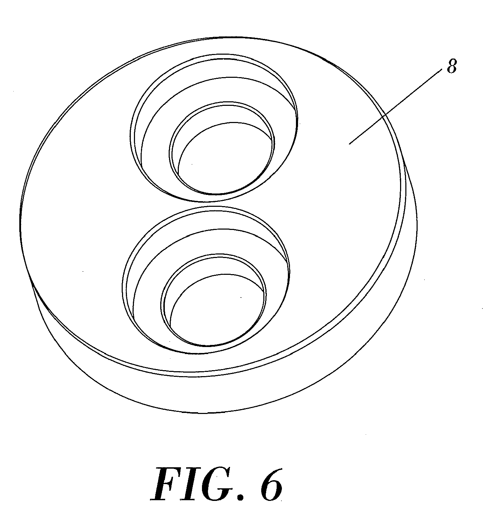

Finally, Figure 6 shows the supporting cover (8) of said second bearing (5) located on the opposite side of intermediate shaft ring (2), and two holes where the support means (9) will be coupled between said supporting cover (8) and between said shaft (3) are in turn observed. Such support means (9) are two screws.

In view of this description and set of drawings, the person skilled in the art will understand that the embodiments of the invention that have been described can be combined in many ways within the object of the invention. The invention has been described according to several preferred embodiments thereof, but for the person skilled in the art it will be evident that many variations can be introduced in said preferred embodiments without exceeding the object of the claimed invention.

## Claims

1. Intermediate shaft support system for internal combustion engines with opposed cylinders comprising
a shaft-holder part (1) coupled to an engine block, where said shaft-holder part (1) comprises an internal cavity (1 a) that is open at both ends,
a bearing-holder shaft (3) inserted inside both said shaft-holder part (1) and an intermediate shaft ring (2), and
a first bearing (4) in contact with said shaft (3) and with said intermediate shaft ring (2),
the system being **characterized in that** it additionally comprises at least one second bearing (5) supported by said shaft (3) which may come into contact with the intermediate shaft ring (2) in the event of a system failure.

2. Intermediate shaft support system according to any of the preceding claims, **characterized in that** it comprises a plurality of lugs (6) coupled to the periphery of said shaft-holder part (1) which may come into contact with said intermediate shaft ring (2) in the event of a system failure.

3. Intermediate shaft support system according to claim 1, **characterized in that** the shaft (3) comprises a cylindrical geometry with an intermediate torus-shaped protuberance (3a) defining the support of the first bearing (4) on one hand and of said at least one second bearing (5) on the other.

4. Intermediate shaft support system according to claim 3, **characterized in that** the plurality of lugs (6) are made of tempered and sealed high-strength steel.

5. Intermediate shaft support system according to any of the preceding claims, **characterized in that** said shaft-holder part (1) comprises a flat surface (1 b) on one of its sides that contacts with the engine block, where said flat surface (1 b) comprises coupling means (7) for coupling with the engine block.

6. Intermediate shaft support system according to any of the preceding claims, **characterized in that** it comprises:
at least one supporting cover (8) for said at least one second bearing (5) located on the opposite side of the intermediate shaft ring (2) with respect to said shaft-holder part (1), and
at least one support means (9) between said at least one supporting cover (8) and said shaft (3).

7. Intermediate shaft support system according to any of the preceding claims, **characterized in that** it comprises:
at least one retaining washer (10) coupled to the shaft (3) and in contact with the shaft-holder part (1),
a nut (11) coupled to the shaft (3) at one of its ends and in contact with said retaining washer (10), and
a lip seal (12).

8. Intermediate shaft support system according to any of the preceding claims, **characterized in that** said at least one second bearing (5) is a combined, high-strength needle and ball bearing.
